# EUROPEAN PATENT APPLICATION

(11) **EP 4 553 592 A1**
(43) Date of publication of application: **14.05.2025**
(21) Application number: 24208421.8
(22) Date of filing: 23.10.2024
(51) Int. Cl.: G05B 19/042, G05B 19/05

(54) **AI-BASED AUTOMATIC CONTROL APPLICATION GENERATION**

(30) Priority: 09.11.2023 US 202363597423 P; 27.03.2024 US 202418618633
(71) Applicant: Schneider Electric Systems USA, Inc., Foxborough, MA 02035 (US)
(72) Inventor: MOHAMED, Abdalla Noureldin Khalil, 34258 Dhahran (SA); RAHAMTALLAH, Motwakil Abdallah Mohamed, 34447 Al Khobar (SA); ALZAIN, Qasim Mohammed, Foxborough, MA 02035 (US)
(74) Representative: Friese Goeden Patentanwälte PartGmbB

(57) **Abstract**

A system for automatically generating an industrial control application includes an automatic control application generator having a control narrative interpretation engine, a logic diagram interpretation engine, and a P&ID interpretation engine that each receive inputs such as control narratives (22), logic diagrams (26), and P&IDs (24) for an industrial control system. The engines interpret and process the respective inputs to obtain and output information in data formats that can be integrated and interpreted by a unified knowledge integrator of the system. The unified knowledge integrator combines the inputs into an internal representation that is then used by a control application builder of the system to build the industrial control application. The control application builder uses the internal representation and engineering tool knowledge (36) to build the industrial control application to adhere to functional and design requirements and to be compatible with engineering tools being used with the industrial control system.

## Description

### CROSS-REFERENCE TO RELATED APPLICATIONS

This application claims the benefit of U.S. Provisional Patent Application Serial. No. 63/597,423, filed on November 9, 2023, and U.S. Nonprovisional Patent Application Serial. No. 18/618,633, filed on March 27, 2024.

### FIELD

The present disclosure generally relates to automated generation of industrial control applications.

### BACKGROUND

Control applications in industrial automation or control systems are traditionally developed manually by control application engineers. These manual processes are often time-consuming and require multiple iterations and resources. Furthermore, the workflow for these manual processes, is often divided amongst a team of control application engineers, which often introduces variability and human error into the processes and outcomes. Accordingly, there have been many attempts to automate certain aspects of the processes for generating control applications, however these attempts still require a significant amount of manual intervention.

### SUMMARY

Aspects of the present disclosure provide systems and methods for automatically generating an industrial control application for an industrial control system.

In one aspect, a system for generating an industrial control application comprises a processor configured to execute an automatic control application generator to build the industrial control application for an industrial control system. A memory device stores computer-executable instructions comprising the automatic control application generator. The automatic control application generator comprises a control narrative interpretation engine configured to receive one or more control narratives for the industrial control system as an input, and process the control narratives to identify and provide as an output, control narrative information in a data format. A diagram interpretation engine is configured to receive one or more diagrams illustrating functional relationships within the industrial control system as an input, and process the diagrams to identify and provide as an output, diagram information in a data format. A unified knowledge integrator is configured to receive the control narrative information and the diagram information as inputs. The unified knowledge integrator is configured to process one or more of the inputs to output an internal representation. A control application builder is configured to receive the internal representation as an input. The control application builder is configured to process the internal representation to generate and provide as output, the industrial control application for the industrial control system.

In another aspect, a method for generating an industrial control application comprises receiving, by a control narrative interpretation engine, one or more control narratives for an industrial control system as an input. The control narrative interpretation engine, processes the one or more control narratives to output control narrative information in a data format. A diagram interpretation engine receives one or more logic diagrams for the industrial control system as input. The diagram interpretation engine processes the one or more logic diagrams to output logic diagram information in the data format. The diagram interpretation engine receives one or more piping and instrumentation diagrams for the industrial control system as input. The diagram interpretation engine processes the one or more piping and instrumentation diagrams to output piping and instrumentation diagram information in the data format. A unified knowledge integrator receives the control narrative information, the logic diagram information, and the piping and instrumentation diagram information as input. The unified knowledge integrator processes, at least one of the control narrative information, the logic diagram information, and the piping and instrumentation diagram information to output an internal representation. A control application generator receives the internal representation as input. The control application builder processes the internal representation to generate and provide as output, an industrial control application for the industrial control system.

Other objects and features will be in part apparent and in part pointed out hereinafter.

### BRIEF DESCRIPTION OF THE DRAWINGS

FIG. 1 is a schematic flow diagram illustrating a known manual process for generating an industrial control application.
FIG. 2 is a schematic block diagram illustrating a system for building an industrial control application, according to an embodiment.
FIG. 3 is a flow diagram illustrating data flow of the system, according to an embodiment.
FIG. 4 is a schematic block diagram of a control narrative interpretation engine of the system, according to an embodiment.
FIG. 5 is a schematic block diagram of a logic diagram interpretation engine of the system, according to an embodiment.
FIG. 6 is a schematic block diagram of a piping and instrumentation interpretation engine of the system, according to an embodiment.
FIG. 7 is a schematic block diagram of a unified knowledge integrator of the system, according to an embodiment.
FIG. 8 is a schematic block diagram of a control application builder of the system, according to an embodiment.
FIG. 9 is a flow diagram illustrating an automatic process flow for generating an industrial control application, according to an embodiment.

Corresponding reference characters indicate corresponding parts throughout the drawings.

### DETAILED DESCRIPTION

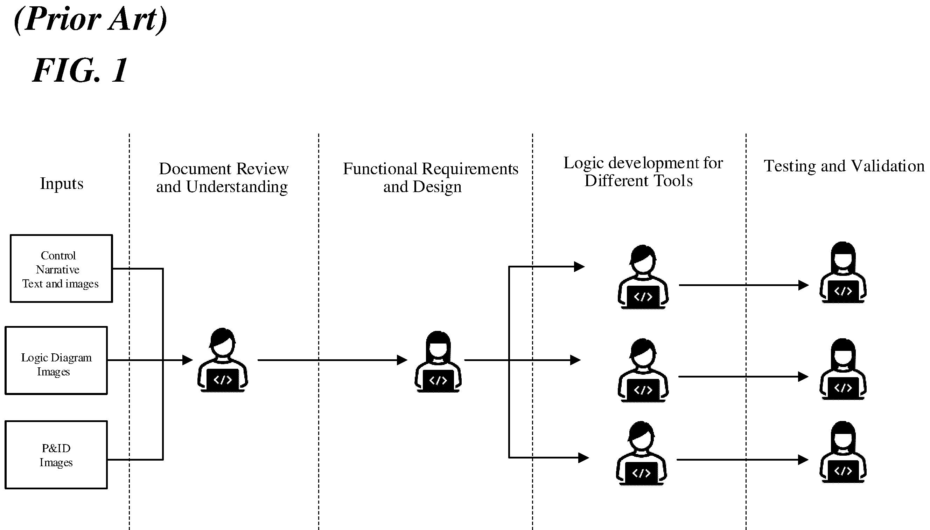

Industrial automation and control systems utilize industrial control applications for monitoring and controlling system components within an industrial plant. Conventional manual processes for generating industrial control applications are time-consuming, resource-intensive, and prone to human error. FIG. 1 provides an example of a conventional manual process for generating an industrial control application. As shown, engineers must manually review and interpret documents such as control narratives, logic diagrams, and piping and instrumentation diagrams (P&IDs) to understand system components of an industrial plant. Next, based on the engineers' collective understandings, the engineers will manually define functional requirements for building the industrial control application. From here, different engineers will use different integrated development environments, to develop separate industrial control applications to accommodate different engineering tools used within different industrial control systems. Each industrial control application is then tested and deployed separately. The outcome of this manual process is highly subjective and variable, as it primarily relies on human interpretation. For example, there are no specific standards or formats governing how control narratives should be written, thereby leading to different interpretations of the control narratives from different engineers. In another example, P&ID's have multiple applicable standards such as ISA5.1, ISO14617, IEC62424, etc., which requires the engineers to know each of the standards for accurate interpretation. There have been several attempts to automate parts of the process for generating industrial control applications, however these conventional attempts are lacking and still require a significant amount of manual intervention.

The present disclosure provides systems and methods for automating the entire process of generating industrial control applications. The systems and methods disclosed herein provide an automated end-to-end solution from interpreting initial documents to generating a fully-functional industrial control application. Accordingly, the time and manual effort spent creating an industrial control application is reduced. Suitably, systems and methods in accordance with the present disclosure provide a more efficient process for generating industrial control applications, as well as provide an improved accuracy of the control applications.

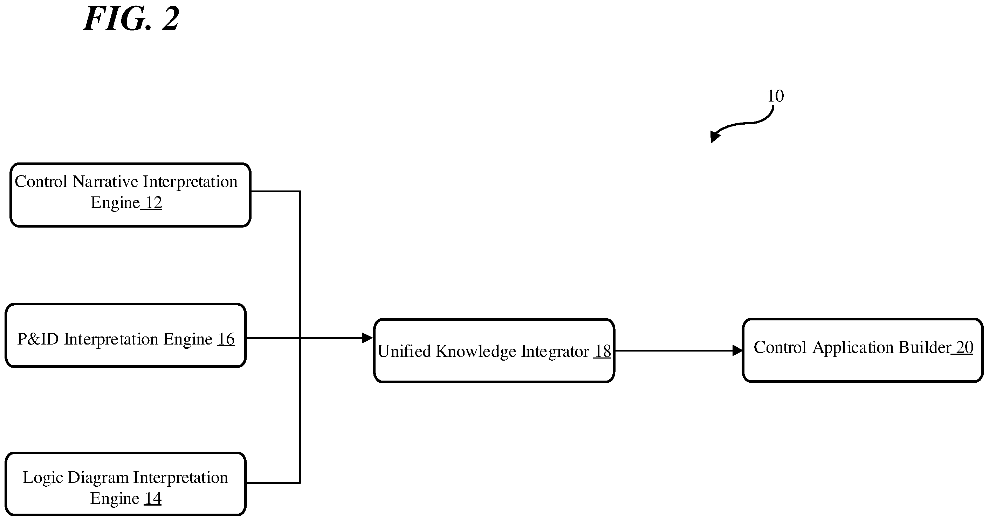

Referring now to FIG. 2 an exemplary embodiment of a system used for automatically generating an industrial control application broadly comprises an industrial control application generator computing device (not shown). The computing device has a processor configured to execute an automatic control application generator 10. The automatic control application generator 10 comprises a control narrative interpretation engine 12, a logic diagram interpretation engine 14, and a piping and instrumentation diagram interpretation engine 16 for interpreting inputs comprising information for building the industrial control application. Each of the engines 12, 14, 16 receives and processes a respective input to output information in a data format. The data format may be a pre-defined data structure format or an unstructured data format. The automatic control application generator 10 further comprises a unified knowledge integrator 18 and a control application builder 20. The unified knowledge integrator 18 combines the outputs from the engines 12, 14, 16 into an internal representation, which is this provided as an input to the control application builder 20 to build the industrial control application.

According to aspects of the present disclosure, one or more tangible, non-transitory storage media, store computer-executable instructions that, when executed by the industrial control application generator computing device, implement the control narrative interpretation engine 12, logic diagram interpretation engine 14, piping and instrumentation diagram interpretation engine 16, unified knowledge integrator 18, and control application builder 20 of automatic control application generator 10. The individual components of the system will now be described in greater detail before turning to exemplary methods of using the system to make an industrial control application.

The industrial control application generator computing device includes a processor, a memory, user inputs, a display, and other related elements. The industrial control application generator computing device may also include circuit boards and/or other electronic components such as a transceiver, wired connectors, or external connection for communicating with other computing devices. For example, the industrial control application generator computing device includes components such as wireless transceivers that connect the industrial control application generator computing device to one or more system databases storing at least one of the control narrative documents 22, logic diagrams 26, and piping and instrumentation diagrams 24. In this manner, the industrial control application generator computing device is operably connected to the one or more system databases for loading and receiving at least the control narrative documents, logic diagrams, and/or piping and instrumentation diagrams as inputs. It will be understood that the industrial control application generator computing device can comprise different types of computing resources, such as one or more local computer devices and/or one or more remote computational resources (e.g., cloud computing resources). In general, the industrial control application computer is configured to execute the automatic control application generator 10 to build an industrial control application based on inputs such as control narratives, logic diagrams and P&IDs.

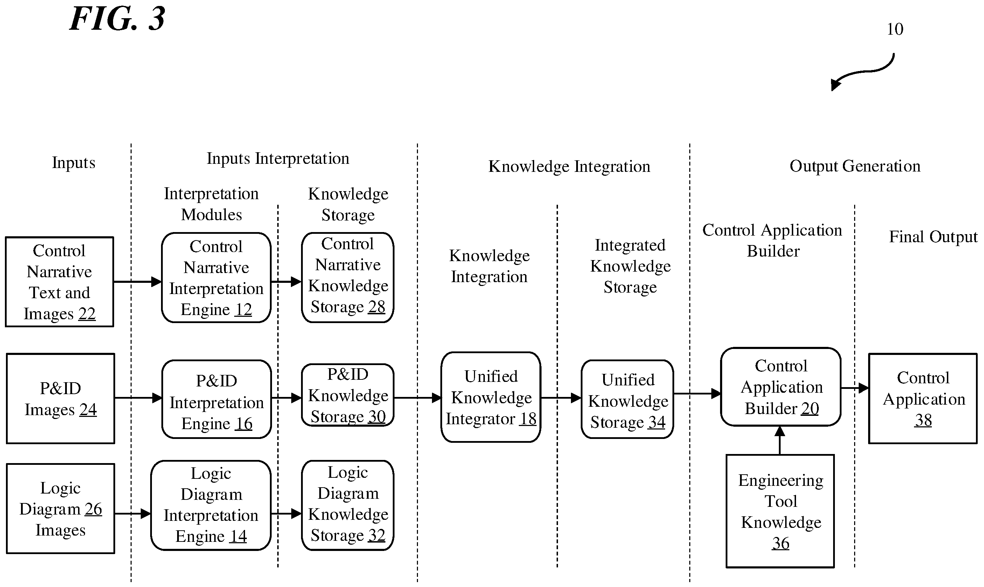

Referring now to FIG. 3, the automatic control application generator 10 comprises a plurality of interpretation modules including engines 12, 14, 16 that perform various automation functions related to the automation of interpreting design and functional requirements for generating an industrial control application as will be described in further detail below. Furthermore, the control application generator 10 comprises the unified knowledge integrator 18 and control application builder 20. In an exemplary embodiment, the automatic control application generator 10 further comprises a plurality of knowledge storages or system databases for storing input and output information. The components of the automatic control application generator 10 are generally designed to ensure that the generated control application is accurate and meets functional and design requirements. In an exemplary embodiment, the automatic application generator 10 is an artificial-intelligence (AI) based system.

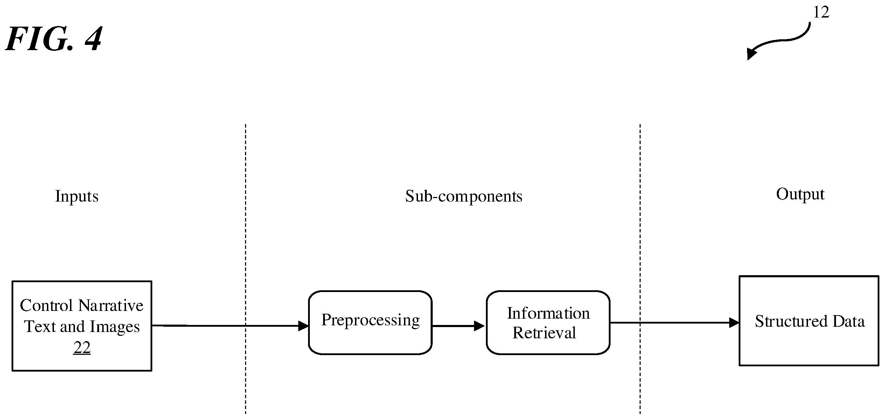

Referring now to FIG. 4, the automatic control application generator 10 comprises the control narrative interpretation engine 12. The control narrative interpretation engine 12 is configured to receive one or more control narratives for the industrial control system as inputs. For example, the control narrative interpretation engine 12 is configured to receive one or more control narrative documents 22 from one or more system databases. The control narratives may be in the form of at least one of textual descriptions and documents, tables, flowcharts, equations, diagrams, lists, annotations, and images. The control narrative interpretation engine 12 is configured to process the control narratives to interpret and extract control narrative information in a data format that can be integrated and utilized by the unified knowledge integrator 18. For example, the control narrative interpretation engine 12 is configured to convert complex and diverse data from the control narrative documents into a structured format that can be further integrated and utilized by the unified knowledge integrator 18. In the illustrated embodiment, the data format includes a machine-readable representation of the extracted control narrative information that is organized into at least one of predefined categories, parameters, or fields to be integrated with other components for analysis and generation.

In one embodiment, processing the control narratives with the control narrative interpretation engine 12 includes pre-processing and retrieving control narrative information from the control narratives to convert the control narratives into the data format. Pre-processing the control narratives involves at least one of cleaning the control narratives, removing duplicates, and changing the format. For example, the control narrative engine 12 is configured to use techniques such as using a Computer Vision Model or a Natural Language Processing (NLP) model to analyze each control narrative to extract key information such as control objectives, control variables, control actions, control strategies, control devices and instruments, control loops, interlocks, alarms, set points and limits, startup procedures, and shutdown procedures. The NLP techniques are used to understand the context and requirements for the industrial control application specified in the control narratives. The extracted control narrative information may be stored in a system database or provided directly as input to the unified knowledge integrator 18.

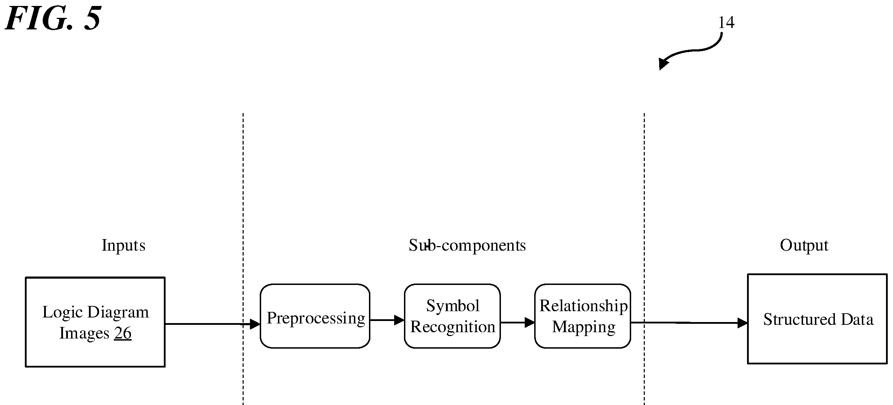

The automatic application generator 10 further comprises a logic diagram interpretation engine 14. As shown in FIG. 5, the logic diagram interpretation engine 14 is configured to receive one or more logic diagrams for the industrial control system as inputs, and process the logic diagrams to interpret and extract logic diagram information in a data format that can be integrated and interpreted by the unified knowledge integrator 18. For example, the logic diagram interpretation engine is configured to receive one or more logic diagrams 26 as input from one or more system databases. The one or more logic diagrams visually represent control logic sequences and interactions among different system components. In one example, the logic diagrams include symbols, lines, and textual annotations that represent system behavior. In the illustrated embodiment, the data format includes a machine-readable representation of the extracted logic diagram information that is organized into at least one of predefined categories, parameters, or fields to be integrated with other components for analysis and application generation.

In one embodiment, processing the one or more logic diagrams with the logic diagram interpretation engine 14 comprises pre-processing, recognizing one or more symbols, and mapping one or more relationships in each of the logic diagrams to transform visual and symbolic elements of the logic diagrams into the data format. Pre-processing the logic diagrams involves at least one of cleaning the logic diagrams, removing duplicates, and changing the format. For example, the logic diagram interpretation engine 14 is configured to use a Computer Vision model designated for logic diagrams that uses image recognition techniques to identify elements such as gates, loops, and conditions. The Computer Vision model is trained on a diverse dataset of logic diagrams to ensure accurate interpretation of the logic diagrams used to build an industrial control application. The Computer Vision model is configured to extract information such as control functions, process variables, control actions, condition dependencies and interlocks, sequences operations, alarms, and indication. The extracted logic diagram information may be stored in a system database or provided directly as input to the unified knowledge integrator 18.

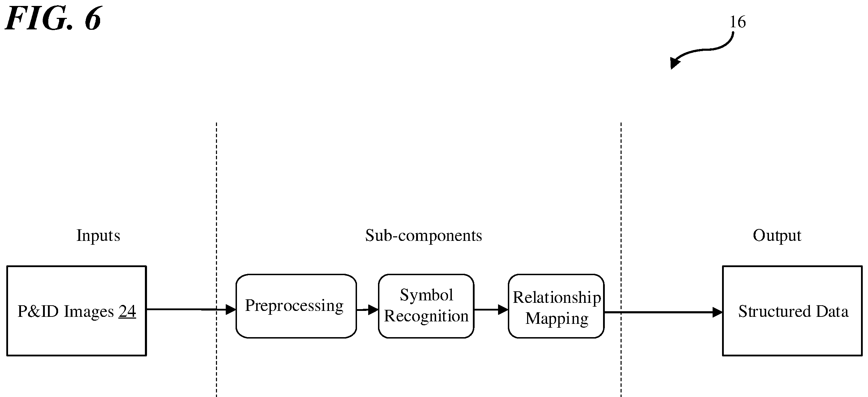

Referring now to FIG. 6, the automatic control application generator 10 comprises the P&ID interpretation engine 16. The P&ID interpretation engine 16 is configured to receive one or more piping and instrumentation diagrams for the industrial control system as an input and process the piping and instrumentation diagrams to interpret and extract P&ID information in a data format that can be integrated and interpreted by the unified knowledge integrator 18. For example, the P&ID interpretation engine 16 is configured to receive one or more piping and instrumentation diagrams 26 as input from one or more system databases. The P&IDs 26 include drawings that detail physical and control relationships between process components of the industrial control system. In one example, these drawings include various symbols, lines, and annotations. In the illustrated embodiment, the data format includes a machine-readable representation of the extracted P&ID information that is organized into at least one of predefined categories, parameters, or fields to be integrated with other components for analysis and application generation.

In an exemplary embodiment, processing the P&IDs with the P&ID interpretation engine 16 comprises pre-processing, recognizing one or more symbols, and mapping one or more relationships in each of the P&IDs to convert complex symbols and relationships in the P&IDs into the data format. Pre-processing the P&IDs involves at least one of cleaning the P&IDs, removing duplicates, and changing the format. For example, the P&ID interpretation engine 16 is configured to use an additional Computer Vision model designated for P&IDs. The additional Computer Vision model employs image recognition techniques capable of recognizing standard symbols, labels, and notations commonly used in the P&IDs. The additional Computer Vision model also identifies relationships between different components, such as process equipment, instruments, control loops, and process conditions. The extracted P&ID information may be stored in a system database or provided directly as input to the unified knowledge integrator 18.

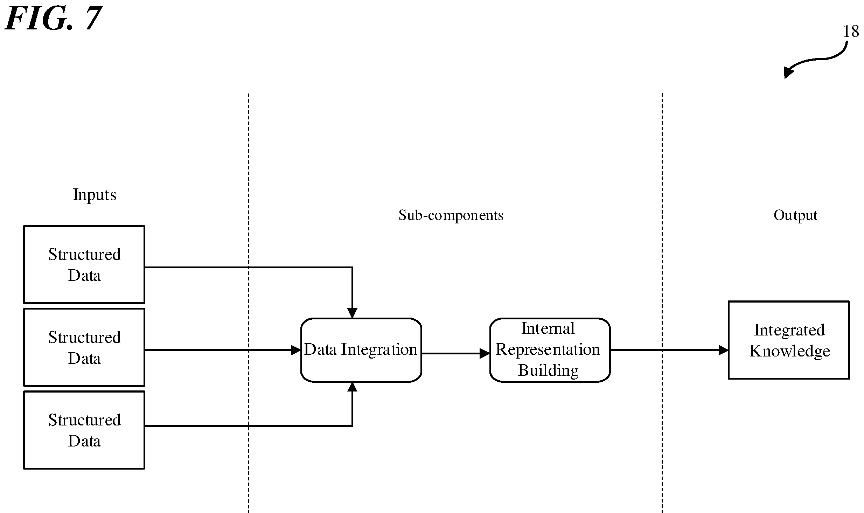

The automatic application generator 10 further comprises a unified knowledge integrator 18 as shown in FIG. 7. The unified knowledge integrator 18 is configured to receive the control narrative information, logic diagram information, and P&ID information in the data formats as inputs. For example, the unified knowledge integrator 18 is configured to receive the inputs from at least one of one or more system databases and directly from the control narrative interpretation engine 12, logic diagram interpretation engine, and P&ID interpretation engine 16. The unified knowledge integrator 18 is further configured to process one or more of the inputs to build an internal representation of the information. For example, the unified knowledge integrator 18 is configured to build the internal representation comprising the control narrative information, logic diagram information, and P&ID information organized into a unified structure, that is utilized by the control application builder 20 to generate the industrial control application.

In the illustrated embodiment, the internal representation serves as a machine-readable model of the integrated information. In one example, the unified knowledge integrator 18 further comprises a Knowledge Integration algorithm that takes the control narrative information, logic diagram information, and P&ID information in the data formats from the control narrative interpretation engine 12, logic diagram interpretation engine 14, and P&ID interpretation engine 16 and integrates the information to form a comprehensive internal representation of the control application. The comprehensive internal representation captures everything contributing to generating the control application as specified by the control narratives, logic diagrams and P&IDs. The representation may be stored in a system database or provided directly as input to the control application builder 20.

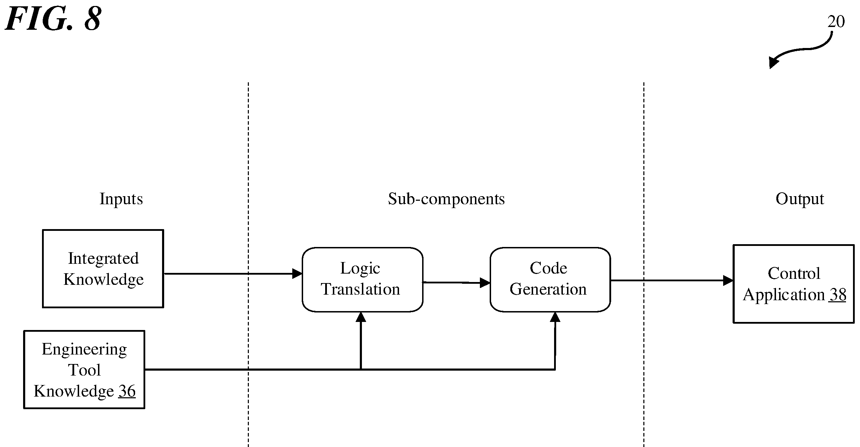

Referring now to FIG. 8, the automatic application generator 10 further comprises the control application builder 20. The control application builder 20 is configured to receive the internal representation from at least one of the unified knowledge integrator 18 and system database, as an input, and process the internal representation to build the industrial control application for the industrial control system. In one embodiment, the control application builder 20 is configured to process the internal representation by translating the internal representation into executable control logic and code to generate and output a fully-functional control application.

In an exemplary embodiment, the control application builder 20 is configured to receive both the internal representation from the unified knowledge integrator 18 and engineering tool knowledge as inputs. For example, the control application builder 20 is configured to receive engineering tool knowledge as input from a system database. The engineering tool knowledge provides information for building the industrial control application to be compatible with an engineering tool used with the industrial control system. In one example, the engineering tooling knowledge comprises at least one of customer-specific requirements, vendor-specific requirements, and industry-specific requirements for the control application. Moreover, the control application builder 20 is configured to process the internal representation and the engineering tool knowledge to generate the industrial control application. The engineering tool knowledge is processed with the internal representation to ensure that the generated control application is compatible with a specific engineering tool used in an industrial control system. For example, the control application builder further comprises a Control Application Generation algorithm, that includes at least one of an AI-based algorithm and a classical algorithm. The Control Application Generation algorithm that takes a series of steps to translate the internal representation and engineering tool knowledge into the industrial control application. Suitably by using both the internal representation and engineering tool knowledge to build the industrial control application, the Control Application Generation algorithm can be programmed to output control applications that are compatible with control systems from different vendors.

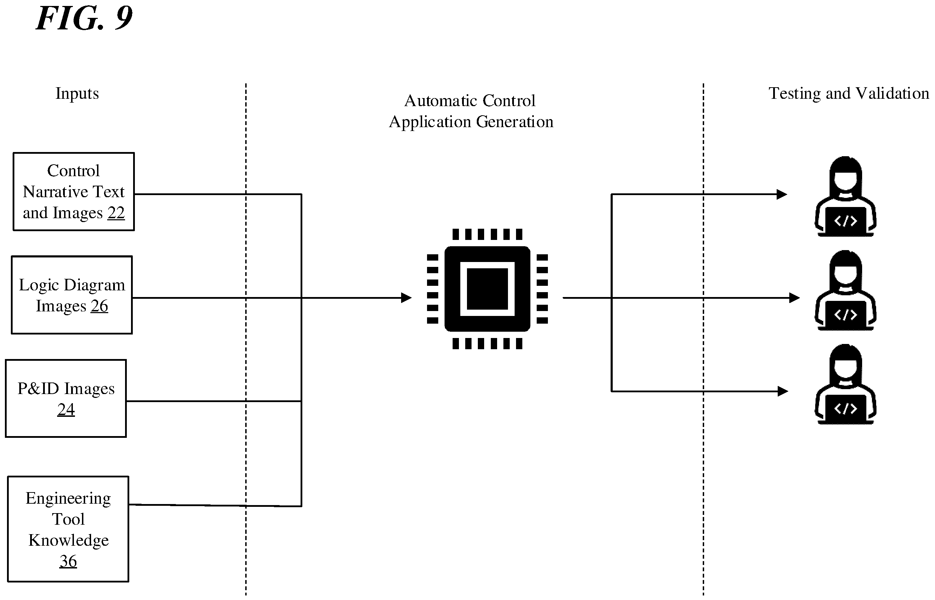

Referring to FIG. 9, process flow for an exemplary method for using the system to automatically generate an industrial control application is shown. The automatic control application generator 10 receives one or more control narratives at the control narrative interpretation engine 12, wherein each control narrative is processed to output control narrative information in the data format. Furthermore, the logic diagram interpretation engine 14 of the automatic control application generator 10 receives one or more logic diagrams and processes the logic diagrams to output logic diagram information in the data format. The P&ID interpretation engine 16 of the automatic control application generator 10 receives one or more P&IDs and processes the P&IDs to output P&ID information in the data format. Each of the engines 12, 14, 16 send the respective information in the respective data formats to the unified knowledge integrator 18 of the automatic control application generator 10.

The unified knowledge integrator 18 receives the information from each of the engines 12, 14, 16 as inputs and processes (e.g., combines) the inputs, to output the internal representation. The unified knowledge integrator 18 sends the internal representation to the control application builder 20. The control application builder 20 receives at least one of the internal representation and engineering tool knowledge as inputs and processes the inputs to generate and output the industrial control application. Next, the generated industrial control application is tested in at least one of a real environment of the industrial control system and a simulated environment of the industrial control system. When testing is complete, the control application is deployed in the industrial control system.

Advantageously, the present disclosure provides a new approach to control application development that delivers large benefits to the field of industrial automation including engineering time reduction, reduced human error, vendor adaptability and comprehensive automation. The automated process disclosed herein for generating an industrial control application significantly reduces the time required for developing control applications, thereby enabling faster project completion times and cost savings. Furthermore, by automating the interpretation of control narratives, logic diagrams, and P&IDs, the system minimizes human error, and provides more reliable control applications. Regarding vendor adaptability, industrial control applications generated with systems and methods herein, are designed to be compatible with different industrial automation platforms and different vendors utilizing engineering tool knowledge. Consequently, systems and methods in accordance with the present disclosure may be applied across a wide range of industrial automation industries such as manufacturing, oil and gas, chemical and petrochemical, power generation, water and wastewater treatment, sea water desalination, mining, building automation, and others to automatically generate control applications. The adaptability of the systems of methods disclosed herein provides a solution that is suitable for both small and large-scale industrial applications.

Having described the invention in detail, it will be apparent that modifications and variations are possible without departing from the scope of the invention defined in the appended claims.

Embodiments of the present disclosure comprise a special purpose computer including a variety of computer hardware, as described in greater detail herein and are operational with other special purpose computing system environments or configurations even if described in connection with an example computing system environment. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the present disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices. For purposes of illustration, programs and other executable program components may be shown as discrete blocks. It is recognized, however, that such programs and components reside at various times in different storage components of a computing device, and are executed by a data processor(s) of the device.

In operation, processors, computers, and/or servers may execute the processor-executable instructions (e.g., software, firmware, and/or hardware) such as those illustrated herein to implement aspects of the invention. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the present disclosure.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

Having described the invention in detail, it will be apparent that modifications and variations are possible without departing from the scope of the invention defined in the appended claims.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products without departing from the scope of the invention, it is intended that all matter contained in the above description and shown in the accompanying drawings shall be interpreted as illustrative and not in a limiting sense.

Accordingly, the present invention may also be described as artificial-intelligence based automatic control application generation.

Accordingly, the present invention may be described as follows, optionally in combination with one or more of the above-mentioned features of the present invention: A system for automatically generating an industrial control application includes an automatic control application generator having a control narrative interpretation engine, a logic diagram interpretation engine, and a P&ID interpretation engine that each receive inputs such as control narratives, logic diagrams, and P&IDs for an industrial control system. The engines interpret and process the respective inputs to obtain and output information in data formats that can be integrated and interpreted by a unified knowledge integrator of the system. The unified knowledge integrator combines the inputs into an internal representation that is then used by a control application builder of the system to build the industrial control application. The control application builder uses the internal representation and engineering tool knowledge to build the industrial control application to adhere to functional and design requirements and to be compatible with engineering tools being used with the industrial control system.

## Claims

1. System for generating an industrial control application, the system comprising:
a processor configured to execute an automatic control application generator to build the industrial control application for an industrial control system;
a memory device storing computer-executable instructions comprising the automatic control application generator, wherein the automatic control application generator comprises:
a control narrative interpretation engine configured to receive one or more control narratives for the industrial control system as an input, and process the control narratives to identify and provide as an output, control narrative information in a data format;
a diagram interpretation engine configured to receive one or more diagrams illustrating functional relationships within the industrial control system as an input, and process the diagrams to identify and provide as an output, diagram information in a data format;
a unified knowledge integrator configured to receive the control narrative information and the diagram information as inputs, and wherein the unified knowledge integrator is configured to process one or more of the inputs, to output an internal representation; and
a control application builder configured to receive the internal representation as an input, and wherein the control application builder is configured to process the internal representation to generate and provide as output, the industrial control application for the industrial control system.

2. System as set forth in claim 1, wherein the control application builder is further configured to receive engineering tool knowledge as an input, the engineering tool knowledge comprising information for building the industrial control application to be compatible with an engineering tool used with the industrial control system, wherein the control application builder is configured to process the engineering tool knowledge with the internal representation to output the industrial control application, and wherein the engineering tooling knowledge comprises at least one of customer-specific requirements, vendor-specific requirements, and industry-specific requirements.

3. System as set forth in any one of claims 1-2, wherein the internal representation comprises at least the control narrative information and the diagram information combined into a unified format that can be comprehended by the control application builder.

4. System as set forth in any one of claims 1-3, wherein each of the data formats define a format that may be integrated and interpreted by the unified knowledge integrator.

5. System as set forth in any one of claims 1-4, wherein the automatic control application generator is artificial-intelligence based.

6. System as set forth in any one of claims 1-5, further comprising one or more databases configured to store at least one of the control narratives and the diagrams, and wherein the processor is operably connected to the one or more databases for loading and receiving the control narratives and the diagrams as inputs.

7. System as set forth in any one of claims 1-6, wherein at least one of the control narrative interpretation engine comprises a Natural Language Processing model, the diagram interpretation engine comprises a Computer Vision model, the unified knowledge integrator comprises a Knowledge Integration algorithm, and the control application builder comprises a Control Application Generation algorithm.

8. System as set forth in any one of claims 1-7, wherein diagrams comprise at least one of logic diagrams and piping and instrumentation diagrams, and wherein the diagram interpretation engine comprises at least one of a logic diagram interpretation engine and a piping instrumentation diagram interpretation engine, the logic diagram interpretation engine being configured to receive one or more logic diagrams for the industrial control system as input, and process the logic diagrams to identify and provide as an output, logic diagram information in a data format, the piping and instrumentation diagram interpretation engine being configured to receive one or more piping and instrumentation diagrams for the industrial control system as input, and process the piping and instrumentation diagrams to identify and provide as an output, piping and instrumentation diagram information in a data format.

9. Method for generating an industrial control application, the method comprising:
receiving, by a control narrative interpretation engine, one or more control narratives for an industrial control system as an input;
processing, by the control narrative interpretation engine, the one or more control narratives to output control narrative information in a data format;
receiving, by a diagram interpretation engine, one or more logic diagrams for the industrial control system as input;
processing, by the diagram interpretation engine, the one or more logic diagrams to output logic diagram information in the data format;
receiving, by the diagram interpretation engine, one or more piping and instrumentation diagrams for the industrial control system as input;
processing, by the diagram interpretation engine, the one or more piping and instrumentation diagrams to output piping and instrumentation diagram information in the data format;
receiving, by a unified knowledge integrator, the control narrative information, the logic diagram information, and the piping and instrumentation diagram information as input;
processing, by the unified knowledge integrator, at least one of the control narrative information, the logic diagram information, and the piping and instrumentation diagram information to output an internal representation;
receiving, by a control application generator, the internal representation as input; and
processing, by a control application builder, the internal representation to generate and provide as output, an industrial control application for the industrial control system.

10. Method as set forth in claim 9, wherein processing the one or more control narratives to obtain control narrative information further comprises pre-processing each control narrative and identifying and extracting the control narrative information from each control narrative.

11. Method as set forth in any one of claims 9-10, wherein processing the one or more logic diagrams to obtain logic diagram information further comprises pre-processing each of the logic diagrams, recognizing one or more symbols of each of the logic diagrams, and mapping one or more relationships in each of the logic diagrams.

12. Method as set forth in any one of claims 9-11, wherein processing the one or more piping and instrumentation diagrams to obtain piping and instrumentation diagram information further comprises pre-processing each of the piping and instrumentation diagrams, recognizing one or more symbols of each of the piping and instrumentation diagrams, and mapping one or more relationships in each of the piping and instrumentation diagrams.

13. Method as set forth in any one of claims 9-12, wherein processing the internal representation to generate the industrial control application for the industrial control system further comprises translating the internal representation into executable control logic and code.

14. Method as set forth in any one of claims 9-13, wherein processing the internal representation to generate the industrial control application for the industrial control system further comprises mapping engineering tool knowledge to the internal representation to build the industrial control application to be compatible with an engineering tool used in the industrial control system.

15. Method as set forth in any one of claims 9-14, further comprising at least one of testing the industrial control application in at least one of a real environment of the industrial control system and a simulated environment of the industrial control system and deploying the industrial control application in the industrial control system.
